# EUROPÄISCHE PATENTSCHRIFT

(11) **EP 2 611 649 B1**
(45) Veröffentlichungstag und Bekanntmachung des Hinweises auf die Patenterteilung: **07.01.2015**
(21) Anmeldenummer: 11738976.7
(22) Anmeldetag: 01.08.2011
(51) Int. Cl.: B60N 2/06, B60N 2/07

(54) **SEITLICH VERSETZBARER FAHRZEUGSITZ**
TRANSVERSALLY DISPLACEABLE VEHICLE SEAT
SIÈGE DE VÉHICULE TRANSPOSABLE TRANSVERSALEMENT

(30) Priorität: 02.09.2010 DE 102010044654
(43) Veröffentlichungstag der Anmeldung: 10.07.2013
(73) Patentinhaber: Johnson Controls Components GmbH & Co. KG, 67657 Kaiserslautern (DE)
(72) Erfinder: PLUTA, Wolfgang, 67699 Heiligenmoschel (DE); BINGERT, Thomas, 67697 Otterbach (DE); CHRISTOFFEL, Thomas, 66909 Herschweiler-Pettersheim (DE)
(74) Vertreter: Wilhelm, Wolfgang
(86) Internationale Anmeldenummer: PCT/EP2011/003857
(87) Internationale Veröffentlichungsnummer: WO 2012/028235

(56) Entgegenhaltungen:
- DE-A1- 3 920 454
- DE-A1- 10 056 757
- DE-A1-102006 037 344

## Beschreibung

Die Erfindung betrifft einen seitlich verschiebbaren Fahrzeugsitz.

Allgemein bekannt sind Fahrzeugsitze, welche ein Schienensystem umfassen, mittels dem der Fahrzeugsitz zur Längseinstellung in Fahrtrichtung sowie entgegen der Fahrtrichtung verschiebbar ist. Ein solches Schienensystem weist dabei zwei parallel zueinander in Fahrtrichtung verlaufende Unterschienen auf, welche am Fahrzeugboden befestigt sind. Zwei Oberschienen, welche in je einer der Unterschienen beweglich geführt sind, tragen gemeinsam eine Sitzschale.

Aus der DE 10 2008 012 376 A1 ist ein Fahrzeugsitzunterbau mit einer Querführung bekannt, bei welcher der Fahrzeugsitz mittels der Querführung seitlich verschiebbar ist. Der Fahrzeugsitzunterbau kann hierbei in bekannter Weise auch unterhalb angeordnete Schienenpaare aufweisen, welche eine Längsführung bilden. Längsführung und Querführung sind hierbei von einander unabhängig.

Aus der DE 10 2006 037 344 A1, die der nächstliegende Stand der Technik ist, ist ein Sitz mit einem Sitzteil und einem Sitzunterbau bekannt, wobei das Sitzteil entlang einer Querachse gegenüber dem Sitzunterbau verschieblich und zumindest teilweise um die Querachse schwenkbar ist. Hierbei ist ein Verschiebeelement mit einem fahrzeugfest angeordneten Unterteil und einem Oberteil vorgesehen, welches einen Teil des Unterbaus bildet. Die Auslösung der Querbewegung in Verbindung mit einer Schwenkbewegung nach vorn erfolgt durch ein Vorklappen der Rückenlehne und dient insbesondere einer Vergrößerung des Stauraums.

Die DE 10 2006 022 732 A1 zeigt einen ähnlichen Sitz wie die DE 10 2006 037 344 A1, jedoch ohne Schwenkbewegung.

Der Erfindung liegt die Aufgabe zugrunde, einen Fahrzeugsitz der eingangs genannten Art zu verbessern.

Diese Aufgabe wird erfindungsgemäß durch einen Fahrzeugsitz mit den Merkmalen des Anspruches 1 gelöst. Vorteilhafte Ausgestaltungen der Erfindung sind Gegenstand der abhängigen Ansprüche.

Hierbei ist ein Fahrzeugsitz vorgesehen, welcher von einer Ausgangsposition in eine seitlich versetzte Endposition und zurück bewegbar ist, wobei der Fahrzeugsitz sowohl in der Ausgangsposition als auch in der Endposition in gleicher Richtung ausgerichtet ist. Hierbei ist der Fahrzeugsitz bevorzugt zumindest annähernd in Fahrtrichtung nach vorn ausgerichtet. Die Richtungsangaben sind hierbei auf die normale Fahrtrichtung bezogen. Der Fahrzeugsitz weist mindestens eine Oberschiene, welche in einer Unterschiene beweglich geführt ist, und ein Sitzkissen auf, welches an der Oberschiene beweglich gelagert ist. Die Seitwärtsbewegung des Sitzkissens und damit des Fahrzeugsitzes in Bezug auf die Schienen wird erfindungsgemäß durch Durchführung einer vorbestimmten Vorwärts- und/oder Rückwärtsrichtung der Oberschiene bewirkt, d.h. eine Vorwärtsbewegung und/oder eine Rückwärtsbewegung der Oberschiene bewirkt eine Bewegung des Sitzkissens, welche schräg hierzu erfolgt, insbesondere bevorzugt im rechten Winkel hierzu.

Vorzugsweise ist das Sitzkissen dabei auf einer sitzstrukturfesten Konsole befestigt, welche auf der mindestens einen Oberschiene aufliegt und an der mindestens einen Oberschiene beweglich gelagert ist.

Mit der Erfindung wird insbesondere vorgesehen, zwei Oberschienen relativ zueinander verschiebbar anzuordnen. Diese relative Verschiebbarkeit der Oberschienen zueinander wird für eine seitliche Verschiebbarkeit des Fahrzeugsitzes ausgenutzt, d.h. durch eine Relativbewegung der beiden parallel angeordneten Oberschienen des Fahrzeugsitzes kann eine seitliche Bewegung desselben erfolgen. Durch eine gleichförmige Bewegung der beiden Oberschienen kann hingegen eine herkömmliche Längseinstellung des Fahrzeugsitzes erfolgen.

Gemäß einer Variante wird vorgesehen, dass durch die Relativbewegung der ersten Oberschiene zu der zweiten Oberschiene eine auf den Oberschienen aufliegende Konsole eine erste Drehung um eine vertikal verlaufende Achse erfährt. Ein Sitzkissen, welches vorzugsweise fest mit der Konsole verbunden ist, erfährt somit die gleiche Drehung. In einem zweiten Schritt erfolgt eine zweite Drehbewegung um eine zweite vertikal verlaufende Achse in entgegengesetzter Richtung, so dass das Sitzkissen wiederum eine entsprechende Drehung durchführt. Durch die Überlagerung der beiden Drehungen um beabstandete Achsen erfolgt eine Verschiebung des Sitzkissens in seitlicher Richtung, also in oder Querrichtung. Dadurch, dass die Konsole an der zweiten Oberschiene zur Durchführung einer ersten Drehbewegung in eine erste Drehrichtung um eine erste Achse, und ferner zur Durchführung einer zeitlich zur ersten Drehbewegung nachgeordnet durchführbaren, zweiten Drehbewegung in eine zweite Drehrichtung, die entgegengesetzt zur ersten Drehrichtung ist, um eine zweite Achse, welche beabstandet zur ersten Achse positioniert ist, an der zweiten Oberschiene drehbar gelagert ist, und die beiden Achsen parallel zueinander verlaufend und in vertikaler Richtung in Bezug auf den Fahrzeugsitz ausgerichtet sind, kann durch die zwei Drehbewegungen eine seitliche Verschiebung realisiert werden, bei welcher die beiden Oberschienen aus einer Ausgangsposition auf gleicher Höhe und in eine Endposition auf gleicher Höhe bewegt werden, wobei sich Ausgangs- und Endposition einander entsprechen. Dies hat insbesondere den Vorteil, dass in der Endposition die gesamte Länge der Längsverstellbarkeit der Schienen nutzbar ist und keine Beeinträchtigung der maximalen Längsverstellbarkeit durch Oberschienen auf unterschiedlicher Höhe gegeben ist.

Insbesondere bevorzugt umfassen die erste und die zweite Drehbewegung den gleichen Winkelbereich, aber verlaufen in entgegengesetzten Richtungen.

Die Konsole weist bevorzugt auf: eine erste Ausnehmung, durch welche ein an der zweiten Oberschiene befestigter erster Bolzen ragt, eine zweite Ausnehmung, durch welche ein an der ersten Oberschiene befestigter zweiter Bolzen ragt, und eine dritte Ausnehmung, durch welche ein an der zweiten Oberschiene befestigter dritter Bolzen ragt, wobei die zweite und dritte Ausnehmung derart als Kulissenbahnen ausgebildet sind, dass bei einer Verschiebung der ersten Oberschiene relativ zu der zweiten Oberschiene in Längsrichtung eine Drehung der Konsole um die Mittelachse des ersten Bolzens ermöglicht ist. Durch das Vorsehen entsprechender als Kulissensteine dienender Bolzen und als Kulissenbahnen dienender Ausnehmungen lassen sich die Drehbewegungen, bewirkt durch ein Längsverstellen einer der Oberschienen, einfach konstruktiv realisieren.

Insbesondere bevorzugt sind die zweite und dritte Ausnehmung derart als Kulissenbahnen ausgebildet, dass bei einer Rückverschiebung der ersten Oberschiene relativ zu der zweiten Oberschiene in Längsrichtung eine Rückdrehung der Konsole um die Mittelachse des dritten Bolzens ermöglicht ist.

Die Umkehr der Drehbewegungen unter Veränderung der Drehachse kann dadurch auf einfache Weise sichergestellt werden, dass ein Riegel einen Verriegelungsmechanismus bildet, welcher in einer Richtung verschiebbar ist, welche durch die Endposition der Mittelachse des ersten Bolzens in der ersten Ausnehmung am Ende der ersten Drehbewegung und die Ausgangsposition der Mittelachse des dritten Bolzens in der dritten Ausnehmung vor Beginn der zweiten Drehbewegung definiert ist. Insbesondere bevorzugt weist der Riegel an seinen Endbereichen Kurvenbahnen auf, welche jeweils einen kurzen gerade und parallel zur Verschieberichtung des Riegels verlaufenden Bereich sowie zwei sich in jeweils eine Richtung senkrecht zu diesem gerade verlaufenden Bereich erstreckende kreisbogenförmige Bereiche aufweist, wobei die beiden kreisbogenförmigen Bereiche sich jeweils auf unterschiedlichen Seiten des Riegels erstrecken und einen Radius aufweisen, welcher dem Abstand des äußeren Endes des geraden Bereichs bis zum inneren Ende des zweiten geraden Bereichs entspricht.

Alternativ zu einem Riegel kann ein Verriegelungsmechanismus vorgesehen sein, welcher durch zwei Druckfedern gebildet ist, welche während der beiden Drehbewegungen abwechselnd beaufschlagt werden, um während der ersten Drehbewegung zuerst den ersten Bolzen in der ersten Ausnehmung drehbar festzulegen, und um während der zweiten Drehbewegung anschließend den dritten Bolzen in der dritten Ausnehmung drehbar festzulegen.

Bevorzugt ist während beider Drehbewegungen die erste Oberschiene an der ersten Unterschiene fixiert, d.h. es wird ausschließlich die zweite Oberschiene bewegt. Hierbei ist während der ersten Drehbewegung die zweite Oberschiene relativ zur zweiten Unterschiene in Bezug auf die normale Ausrichtung des Fahrzeugsitzes in einem Fahrzeug nach hinten und während der zweiten Drehbewegung wieder nach vorn, zurück in die Ausgangsposition, verschiebbar, währenddessen der Fahrzeugsitz durch zwei Drehbewegungen um unterschiedliche Achsen zur Seite verschiebbar ist.

Selbstverständlich ist es auch denkbar, dass während der ersten Drehbewegung die zweite Oberschiene relativ zur zweiten Unterschiene in Bezug auf die normale Ausrichtung des Fahrzeugsitzes in einem Fahrzeug nach vorne und während der zweiten Drehbewegung wieder nach hinten, zurück in die Ausgangsposition, verschiebbar ist, währenddessen der Fahrzeugsitz durch zwei Drehbewegungen um unterschiedliche Achsen zur Seite verschiebbar ist.

Gemäß einer alternativen Ausführungsform kann die Seitwärtsbewegung auch durch eine einfache Vor- oder Rückwärtsbewegung einer der beiden Oberschienen bewirkt werden. Dies hat den Vorteil einer deutlich einfacheren Geometrie und eines einfacheren Bewegungsablaufs.

Bevorzugt ist hierbei die Konsole mittels Kulissenbahnen, gebildet durch schlitzförmige Ausnehmungen in Verbindung mit oberschienenfesten Kulissensteinen geführt, wobei sich die Ausrichtung der Kulissenbahn(en) auf der Seite der ersten Oberschiene von der Ausrichtung der Kulissenbahn(en) auf der Seite der zweiten Oberschiene unterscheidet, und auf der Seite der ersten und/oder der zweiten Oberschiene zwei einander entsprechende Kulissenbahnen ausgebildet sind, und insgesamt mindestens drei Kulissenbahnen vorgesehen sind. Hierbei ist ausreichend, wenn auf einer Seite eine Kulissenbahn und auf der anderen Seite zwei Kulissenbahnen vorgesehen sind, bevorzugt sind jedoch auf beiden Seiten jeweils genau zwei Kulissenbahnen vorgesehen.

Bevorzugt ist die oder sind die Kulissenbahnen auf der Seite einer Oberschiene senkrecht zur Längsrichtung der Oberschiene angeordnet. Die Kulissenbahn oder die Kulissenbahnen auf der Seite der anderen Oberschiene sind schräg hierzu angeordnet, bevorzugt in einem Winkelbereich zwischen 30 und 60° zur Längsrichtung der Oberschiene und insbesondere bevorzugt ca. 45° zur Längsrichtung der Oberschiene.

Zum Antrieb der bewegten Oberschiene ist bevorzugt mindestens ein Motor vorgesehen, wobei bevorzugt beide Oberschienen durch jeweils einen Motor antreibbar sind, so dass beispielsweise auch während einer Längsverstellung des Fahrzeugsitzes eine Seitwärtsverstellung desselben möglich ist.

Im Folgenden werden anhand der Zeichnung mehrere Ausführungsbeispiele näher erläutert. Es zeigen:
- Fig. 1: einen Unterbau eines erfindungsgemäßen Fahrzeugsitzes gemäß dem ersten Ausführungsbeispiel,
- Fig. 2: den in Fig. 1 gezeigten Unterbau mit gedrehter Konsole nach erfolgter erster Drehung,
- Fig. 3: den in Fig. 1 gezeigten Unterbau mit gedrehter Konsole nach einem Zwischenschritt zum Entriegeln der zweiten Drehachse,
- Fig. 4: den in Fig. 1 gezeigten Unterbau in seitlich verschobener Endstellung,
- Fig. 5: einen in Explosionsdarstellung dargestellten Fahrzeugsitz in der normalen Gebrauchsstellung,
- Fig. 6: einen Unterbau eines erfindungsgemäßen Fahrzeugsitzes gemäß dem zweiten Ausführungsbeispiel,
- Fig. 7: den in Fig. 6 gezeigten Unterbau mit gedrehter Konsole nach erfolgter erster Drehung,
- Fig. 8: den in Fig. 6 gezeigten Unterbau in seitlich verschobener Endstellung,
- Fig. 9: eine überlagerte Darstellung der Anfangs- und Endposition gemäß dem zweiten Ausführungsbeispiel,
- Fig. 10: eine perspektivische Ansicht eines Unterbaus eines erfindungsgemäßen Fahrzeugsitzes gemäß dem dritten Ausführungsbeispiel in - bei Blickrichtung in Fahrtrichtung - seitlich rechts angeordneter Stellung (Ausgangsposition),
- Fig. 11: den Unterbau gemäß dem dritten Ausführungsbeispiel in seitlich nach links verschobener Stellung (Endposition),
- Fig. 12: eine Frontansicht des Unterbaus von Fig. 10,
- Fig. 13: eine Frontansicht des Unterbaus von Fig. 11,
- Fig. 14: eine Seitenansicht des Unterbaus von Fig. 10,
- Fig. 15: eine Seitenansicht des Unterbaus von Fig. 11,
- Fig. 16: eine Draufsicht des Unterbaus von Fig. 10,
- Fig. 17: eine Draufsicht des Unterbaus von Fig. 11,
- Fig. 18: eine Draufsicht des Unterbaus gemäß dem vierten Ausführungsbeispiel in - bei Blickrichtung in Fahrtrichtung - seitlich rechts angeordneter Stellung (Ausgangsposition),
- Fig. 19: eine perspektivische Ansicht des Unterbaus von Fig. 18,
- Fig. 20: eine perspektivische Ansicht des Unterbaus von Fig. 18 in einer ersten Zwischenstellung,
- Fig. 21: eine perspektivische Ansicht des Unterbaus von Fig. 18 in einer zweiten Zwischenstellung,
- Fig. 22: eine perspektivische Ansicht des Unterbaus von Fig. 18 in einer dritten Zwischenstellung, und
- Fig. 23: eine perspektivische Ansicht des Unterbaus von Fig. 18 in der seitlich links angeordneten Endposition.

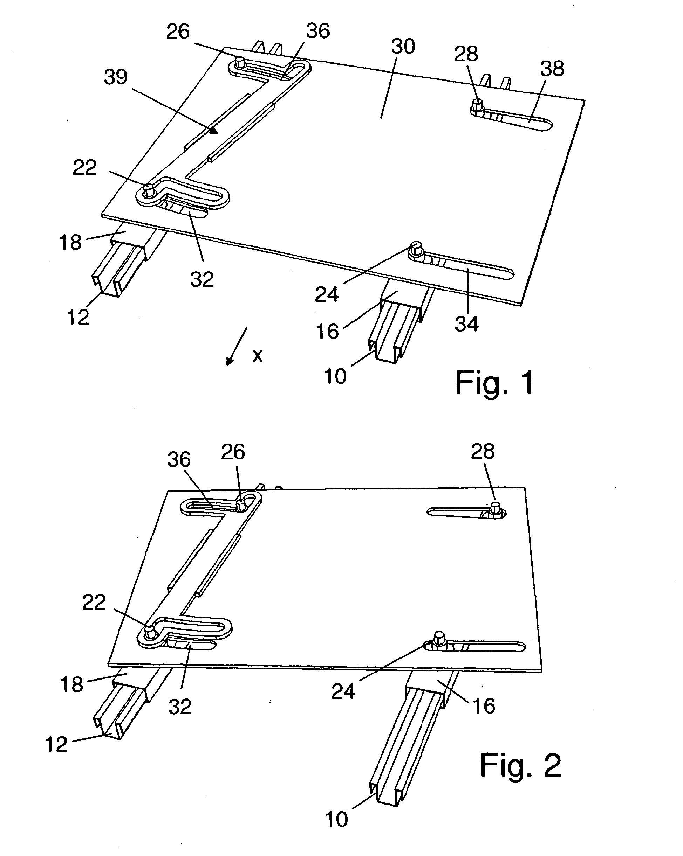

In Fig. 1 ist ein Unterbau eines erfindungsgemäßen Fahrzeugsitzes dargestellt. Eine erste Unterschiene 10 und eine zweite Unterschiene 12 sind parallel zueinander an einem Fahrzeugboden befestigt (fahrzeugstrukturfest). Eine erste Oberschiene 16 ist in der ersten Unterschiene 10 beweglich geführt. Ebenso ist eine zweite Oberschiene 18 in der zweiten Unterschiene 12 beweglich geführt. Die Bewegungsrichtung der Oberschienen 16, 18 relativ zu den Unterschienen 10, 12 sei als Längsrichtung bezeichnet.

In diesem Beispiel verläuft die Längsrichtung parallel zu der Fahrtrichtung. Die Längsrichtung ist in der Zeichnung bei allen Ausführungsbeispielen durch den Pfeil x bezeichnet. Die Oberschienen 16, 18 sind somit in Fahrtrichtung sowie entgegen der Fahrtrichtung verschiebbar. Es ist auch denkbar, die Unterschienen 10, 12 schräg oder geneigt zur Fahrtrichtung anzuordnen. In diesem Fall sind die Oberschienen 16, 18 schräg oder geneigt zur Fahrtrichtung verschiebbar.

Eine (sitzstrukturfeste) Konsole 30 liegt auf den Oberschienen 16, 18 auf und ist auf eine nachfolgend beschriebene Weise an diesen gelagert. Auf der Konsole 30 ist ein Sitzkissen 44 montiert. Die Konsole 30 hat in diesem Beispiel die Form einer ebenen Platte, welche sich im wesentlichen in Längsrichtung und in einer senkrecht dazu (und horizontal) verlaufenden, als Querrichtung bezeichneten Richtung erstreckt.

Durch synchrones Verschieben der ersten Oberschiene 16 und der zweiten Oberschiene 18 relativ zu den Unterschienen 10, 12 erfährt die Konsole 30 eine Verschiebung in Längsrichtung.

Eine senkrecht zu der Längsrichtung und senkrecht zu der Querrichtung verlaufende Richtung wird im folgenden als Vertikalrichtung bezeichnet.

Die Konsole 30 weist eine erste Ausnehmung 32 auf, durch welche ein an der zweiten Oberschiene 18 befestigter erster Bolzen 22 ragt, dessen Mittelachse eine erste Drehachse bildet.

Weiterhin weist die Konsole 30 eine zweite Ausnehmung 34 in Gestalt einer Kulissenbahn auf, durch welche ein an der ersten Oberschiene 16 befestigter zweiter Bolzen 24 als Kulissenstein ragt. Die zweite Ausnehmung 34 hat in diesem Beispiel die Form eines in Querrichtung verlaufenden geraden Langlochs mit einer dem Durchmesser des zweiten Bolzens 24 entsprechenden Breite. Die zweite Ausnehmung 34 kann sich auch schräg zur Querrichtung erstrecken. Auch eine andere Gestaltung, beispielsweise eine Krümmung, ist denkbar. Weiterhin ist denkbar, dass die zweite Ausnehmung 34 sich bis zum Rand der Konsole 30 erstreckt, wodurch eine nach außen offene gabelförmige Anordnung entsteht, in welcher der zweite Bolzen 24 geführt ist.

Die Konsole 30 weist außerdem eine dritte Ausnehmung 36 in Gestalt einer Kulissenbahn auf, durch welche ein an der zweiten Oberschiene 18 befestigter dritter Bolzen 26 als Kulissenstein ragt. Die dritte Ausnehmung 36 hat die Gestalt eines Langlochs in Form eines Kreissegments mit einer dem Durchmesser des dritte Bolzens 26 entsprechenden Breite. Der Radius dieses Kreissegments entspricht dem Abstand der Mittelachse des Drehbolzens 22 zur Mittelachse des dritten Bolzens 26.

Weiterhin weist die Konsole 30 eine vierte Ausnehmung 38 in Gestalt einer Kulissenbahn auf, durch welche ein an der ersten Oberschiene 16 befestigter vierter Bolzen 28 als Kulissenstein ragt. Die vierte Ausnehmung 38 hat die Form eines gekrümmten Langlochs mit einer dem Durchmesser des vierten Bolzens 28 entsprechenden Breite.

Die Mittelachsen der Bolzen 22, 24, 26, 28 verlaufen parallel zueinander in Vertikalrichtung. Die Ausnehmungen 34, 36, 38 sind so ausgestaltet, dass bei einer Verschiebung der ersten Oberschiene 16 relativ zu der zweiten Oberschiene 18 in Längsrichtung eine Drehung der Konsole 30 um die Mittelachse des ersten Bolzens 22 ermöglicht ist. Hierbei ist der erste Bolzen 22 durch einen Verriegelungsmechanismus 39 bei der Drehbewegung stationär an einem Ende der als bogenförmige Kurvenbahn ausgebildeten Ausnehmung 32 positioniert und in dieser Position drehbar gehalten.

Eine durch eine solche Verschiebung der ersten Oberschiene 16 relativ zu der zweiten Oberschiene 18 erreichte Stellung ist in Fig. 2 dargestellt. Die Konsole 30 hat dabei gegenüber der in Fig. 1 gezeigten Stellung eine Drehung um die in Vertikalrichtung verlaufende Mittelachse des ersten Bolzens 22, welche die erste Drehachse bildet, erfahren.

In einem Zwischenschritt nach erfolgter erster Drehbewegung erfolgt ein Lösen der Verriegelung des ersten Bolzens 22, so dass derselbe innerhalb der ersten Ausnehmung 32 verschiebbar ist. Hierfür wird die Verriegelungsvorrichtung 39 von ihrer ersten Endposition in die zweite Endposition bewegt, so dass nunmehr der dritte Bolzen 26 in der aktuellen Endposition drehbar gehalten wird, während der erste Bolzen 22 sich entlang der ersten Ausnehmung 32 bewegen kann.

Die Verriegelungsvorrichtung 39 ist vorliegend durch einen langgestreckten Riegel, der in einer Richtung geführt durch eine an der Konsole 30 ausgebildete Führung in einer Richtung verschiebbar ist, welche durch die Endposition der Mittelachse des ersten Bolzens 22 in der ersten Ausnehmung 32 am Ende der ersten Drehbewegung und die Ausgangsposition der Mittelachse des dritten Bolzens 26 in der dritten Ausnehmung 36 vor Beginn der zweiten Drehbewegung definiert ist. An den Endbereichen des Riegels sind Kurvenbahnen vorgesehen, welche jeweils einen kurzen gerade und parallel zur Führungsrichtung verlaufenden Bereich sowie zwei sich in jeweils eine Richtung senkrecht zu diesem gerade verlaufenden Bereich erstreckende kreisbogenförmige Bereiche aufweist, wobei die beiden kreisbogenförmigen Bereiche sich jeweils auf unterschiedlichen Seiten des Riegels erstrecken und einen Radius aufweisen, welcher dem Abstand des äußeren Endes des geraden Bereichs bis zum inneren Ende des zweiten geraden Bereichs entspricht.

Im Anschluss an den Zwischenschritt des Lösens und Neuverriegelns der Verriegelungsvorrichtung 39 erfolgt eine zweite Drehbewegung. Diese zweite Drehbewegung erfolgt in entgegengesetzter Richtung zur ersten Drehbewegung und erfolgt über den gleichen Drehwinkel wie die erste Drehbewegung.

Während der gesamten Bewegung ist vorliegend die zweite Oberschiene 18 in der gleichen Relativstellung zur zweiten Unterschiene 12. Die erste Oberschiene 16 verändert ihre Relativstellung zur ersten Unterschiene 10 während der ersten Drehbewegung in Gestalt einer Längsverschiebung nach hinten und während der zweiten Drehbewegung in Gestalt einer Längsverschiebung nach vorn, wobei die absoluten Längen der beiden Längsverschiebungen einander entsprechen.

Prinzipiell ist natürlich auch eine Überlagerung mit einer "normalen" Längsverschiebung des Fahrzeugsitzes möglich.

Zum Antrieb der ersten Oberschiene 16 ist ein erster Motor vorgesehen, welcher im Fahrzeugboden angeordnet ist. Ebenso ist zum Antrieb der zweiten Oberschiene 18 ein zweiter Motor vorgesehen, welcher ebenfalls im Fahrzeugboden angeordnet ist. Die Motoren sind beispielsweise als elektronisch kommutierte oder als bürstenbehaftete Gleichstrommotoren ausgeführt. Die Motoren sind unabhängig voneinander ansteuerbar.

Es ist auch denkbar, die Motoren an anderen Stellen, beispielsweise auf dem Fahrzeugboden oder auch oberschienenfest anzuordnen. Weiterhin ist denkbar, nur einen Motor zum Antrieb beider Oberschienen 16, 18 vorzusehen, wobei in diesem Fall zu jeder Oberschiene 16, 18 je eine zu- und abschaltbare Kupplung vorgesehen ist.

In einer alternativen Ausführung können die Motoren auch entfallen wobei die Oberschienen 16, 18 manuell verschiebbar sind. In diesem Fall verfügt jede der Oberschienen 16, 18 über eine separat entriegelbare Verriegelungseinrichtung.

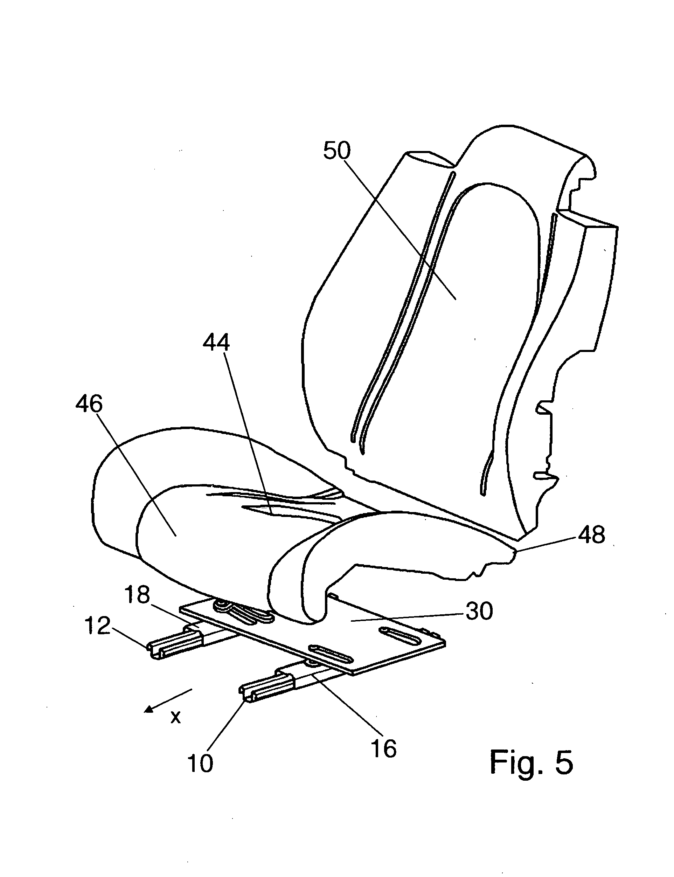

In Fig. 5 ist ein erfindungsgemäßer Fahrzeugsitz in Gebrauchsstellung dargestellt. Bei dem hier gezeigten Ausführungsbeispiel handelt es sich um einen Fahrersitz eines Linkslenkerfahrzeugs. Die durch die Unterschienen 10, 12 definierte Längsrichtung entspricht dabei zumindest annähernd der Fahrtrichtung.

Auf der Konsole 30 ist ein Sitzkissen 44 befestigt, welches ein in Längsrichtung vorderes Ende 46 und ein in Längsrichtung hinteres Ende 48 aufweist. Im Bereich des hinteren Endes 48 des Sitzkissens 44 ist eine Rückenlehne 50 angeordnet. Das Sitzkissen 44 und die Rückenlehne 50 bilden eine Sitzschale. In der Gebrauchsstellung weist das vordere Ende 46 des Sitzkissens 44 annähernd in Fahrtrichtung und das hintere Ende 48 des Sitzkissens 44 weist annähernd entgegen der Fahrtrichtung.

Eine Bewegung einer Oberschienen 16, 18 in Richtung des vorderen Endes 46 des Sitzkissens 44 entspricht somit einer Bewegung annähernd in Fahrtrichtung und wird im folgenden als Vorwärtsbewegung bezeichnet. Eine Bewegung einer Oberschienen 16, 18 in Richtung des hinteren Endes 48 des Sitzkissens 44 entspricht einer Bewegung annähernd entgegen der Fahrtrichtung und wird im folgenden als Rückwärtsbewegung bezeichnet.

Bei dem ersten Ausführungsbeispiel befinden sich die erste Oberschiene 16 und die erste Unterschiene 10 in Fahrtrichtung gesehen links von der zweiten Oberschiene 18 und der zweiten Unterschiene 12. Die zweite Oberschiene 18 und die zweite Unterschiene 12 sind somit der Fahrzeugmitte zugewandt, die erste Oberschiene 16 und die erste Unterschiene 10 sind einer hier nicht dargestellten Fahrertür zugewandt.

Durch Verschiebung der ersten Oberschiene 16 relativ zu der ersten Unterschiene 10 in Rückwärtsrichtung bei gleichzeitigem Feststellen der zweiten Oberschiene 18 bezüglich der zweiten Unterschiene 12 erfährt die Konsole 30 eine Drehung um eine in Vertikalrichtung verlaufende Achse, und zwar entgegen dem Uhrzeigersinn. Das Sitzkissen 44 und die Rückenlehne 50 erfahren die gleiche Drehung, wodurch das vordere Ende 46 des Sitzkissens 44 sich der Fahrertür nähert.

In dieser gedrehten Stellung des Fahrzeugsitzes ist beispielsweise ein Einstieg des Fahrers in das Fahrzeug auf den Fahrersitz vereinfacht möglich.

Die hier beschriebene erste Drehung des Fahrzeugsitzes entgegen dem Uhrzeigersinn ist selbstverständlich auch durch andere Bewegungen der Oberschienen 16, 18 realisierbar, beispielsweise durch eine Verschiebung der zweiten Oberschiene 18 in Vorwärtsrichtung bei gleichzeitigem Feststellen der ersten Oberschiene 16, sowie bei gleichzeitiger Verschiebung der ersten Oberschiene 16 in Rückwärtsrichtung und der zweiten Oberschiene 18 in Vorwärtsrichtung.

Eine Drehung des Fahrzeugsitzes entgegen dem Uhrzeigersinn findet statt, wenn sich die erste Oberschiene 16 relativ zu der zweiten Oberschiene 18 in Rückwärtsrichtung bewegt. Eine gleichzeitige Verschiebung der ersten Oberschiene 16 in Rückwärtsrichtung und der zweiten Oberschiene 18 in Vorwärtsrichtung bringt zusätzlich den Vorteil, dass die beschriebene gedrehte Stellung aus der Gebrauchsstellung heraus in minimaler Zeit erreicht wird.

Das Rückdrehen in die normale Ausrichtung unter gleichzeitiger Verschiebung des Sitzkissens 44 samt Rückenlehne 50 in seitlicher Richtung in Richtung Fahrzeugmitte erfolgt, durch besagte zweite Drehbewegung im Uhrzeigersinn um die Achse, welche durch die Mittelachse des dritten Bolzens 26 gebildet wird.

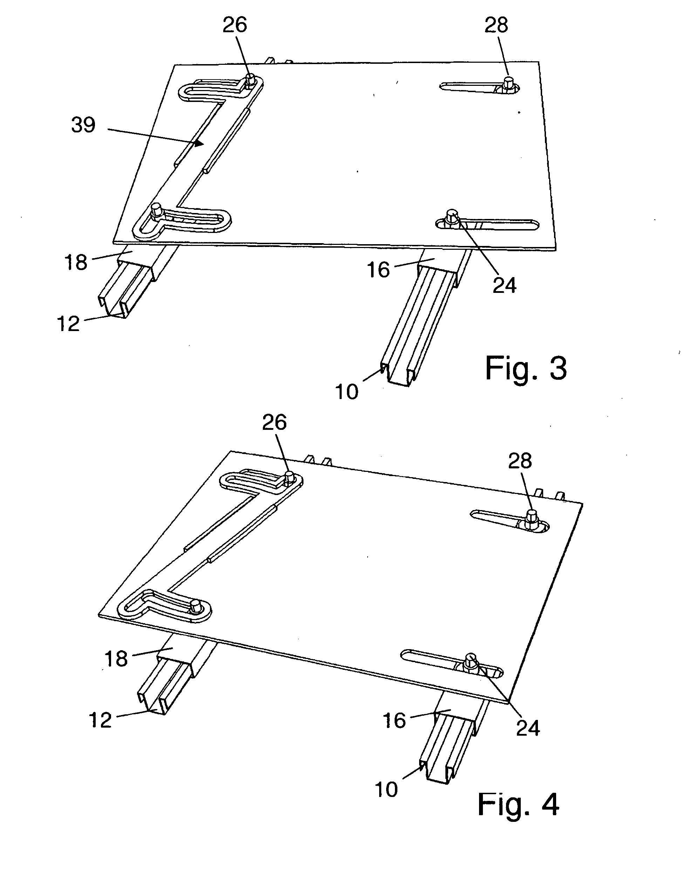

Der in Fig. 1-4 gezeigte Unterbau ist aufgrund der Anordnung und der Abmessungen der Ausnehmungen lediglich für eine Drehung aus der Gebrauchsstellung heraus entgegen dem Uhrzeigersinn und/oder eine seitliche Verschiebung in eine Richtung geeignet.

Zur Realisierung einer Drehung eines Fahrzeugsitzes aus der Gebrauchsstellung heraus im Uhrzeigersinn, welche beispielsweise für einen Beifahrersitz gewünscht ist, bzw. einer seitlichen Verschiebung in entgegengesetzter Richtung, können die Konsole 30 samt Verriegelungsmechanismus 39 spiegelbildlich ausgeführt werden.

Ein Fahrzeugsitz kann auch derart ausgestaltet sein, dass eine erste Drehung aus der Gebrauchsstellung heraus im Uhrzeigersinn ebenso wie eine erste Drehung entgegen dem Uhrzeigersinn ermöglicht ist. Hiermit ist entsprechend auch eine Verschiebbarkeit in beide seitlichen Richtungen realisierbar.

Bei dem in Fig. 1-4 gezeigten Unterbau liegt in der Gebrauchsstellung der zweite Bolzen 24 an einem Ende der zweiten Ausnehmung 34, der dritte Bolzen 26 an einem Ende der dritten Ausnehmung 36 und der vierte Bolzen 28 an einem Ende der vierten Ausnehmung 38 an. Durch Gestaltung der ersten Ausnehmung 32, zweiten Ausnehmung 34, der dritten Ausnehmung 36 und der vierten Ausnehmung 38 derart, dass in der (mittleren Ausgangs-)Gebrauchsstellung der erste Bolzen 22 in einem Mittelbereich der ersten Ausnehmung 32, der zweite Bolzen 24 in einem Mittelbereich der zweiten Ausnehmung 34, der dritte Bolzen 26 in einem Mittelbereich der dritten Ausnehmung 36 und der vierte Bolzen 38 in einem Mittelbereich der vierten Ausnehmung 38 liegen, ist eine Drehung des Fahrzeugsitzes aus der Gebrauchsstellung heraus im Uhrzeigersinn ebenso wie entgegen dem Uhrzeigersinn ermöglicht. Nach erfolgter erster Drehung in die erste Drehrichtung erfolgt ein Festlegen des zweiten Bolzens 24 innerhalb der entsprechenden Endposition in der zweiten Ausnehmung 34 und die zweite Drehbewegung in entgegengesetzter Richtung zur ersten Drehbewegung erfolgt um den zweiten Bolzen 24. Somit ist eine seitliche Verschiebbarkeit in beide Richtungen gegeben.

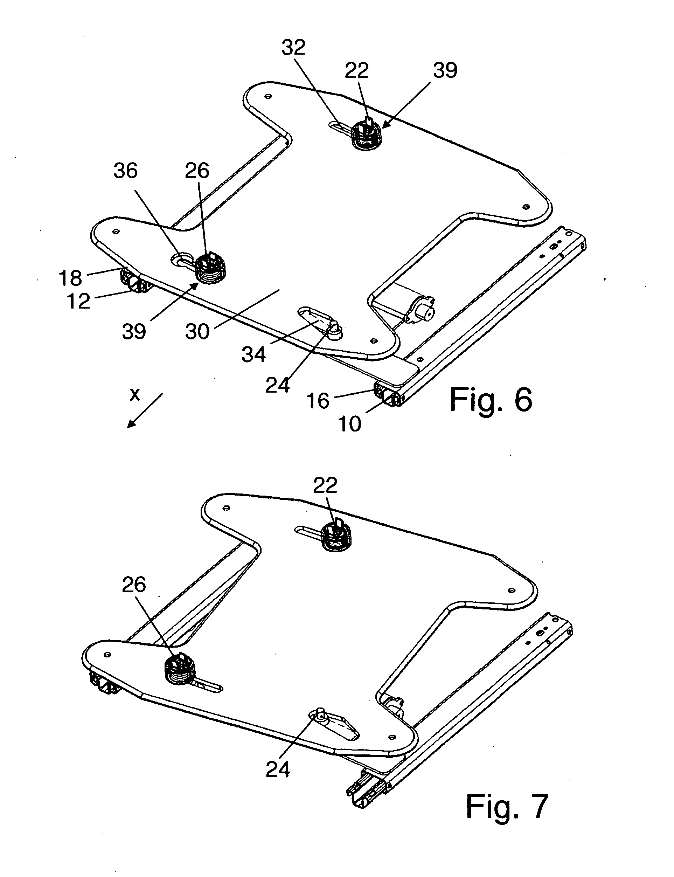

In Fig. 6-9 ist als zweites Ausführungsbeispiel eine alternative Ausführungsform eines Unterbaus eines Fahrzeugsitzes, insbesondere eines Fahrersitzes, in der Gebrauchsstellung, Zwischenstellungen und einer seitlich verschobenen Stellung gezeigt. Gleiche oder gleichwirkende Elemente sind hierbei mit den gleichen Bezugszeichen wie entsprechende Elemente des ersten Ausführungsbeispiels bezeichnet.

Der Unterbau gemäß dem zweiten Ausführungsbeispiel umfasst, ebenso wie der in Fig. 1-5 gezeigte Unterbau, zwei Unterschienen 10, 12 und zwei Oberschienen 16, 18. Die zweite Oberschiene 18 weist - ähnlich dem ersten Ausführungsbeispiel - einen ersten Bolzen 22 und einen dritten Bolzen 26 auf. Die erste Oberschiene 16 weist - im Unterschied zum ersten Ausführungsbeispiel - lediglich einen zweiten Bolzen 24 auf. Wesentlicher Unterschied zwischen dem ersten und zweiten Ausführungsbeispiel ist der Verriegelungsmechanismus 39, welcher gemäß dem zweiten Ausführungsbeispiel durch zwei die entsprechenden Bolzen 22 und 26 jeweils drehbar haltende Druckfedern gebildet ist.

Eine Konsole 30 liegt auf den Oberschienen 16, 18 auf und ist an diesen gelagert und durch Bolzen 22, 24 und 26 geführt. Die Konsole 30 umfasst, ähnlich wie die in Fig. 1 gezeigte Konsole 30, eine erste Ausnehmung 32, eine zweite Ausnehmung 34 und eine dritte Ausnehmung 36. Die vierte Ausnehmung entfällt, ebenso wie der vierte Bolzen. Der erste Bolzen 22 durchragt dabei die erste Ausnehmung 32, der zweite Bolzen 24 durchragt die zweite Ausnehmung 34 und der dritte Bolzen 26 durchragt die dritte Ausnehmung 36.

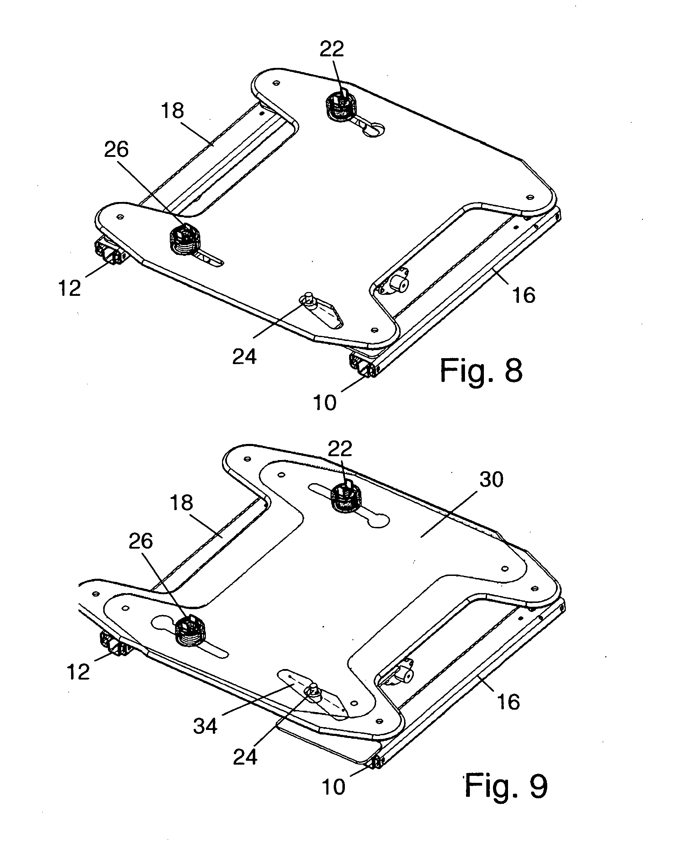

Die Funktion der einzelnen Bolzen in Verbindung mit den entsprechenden Ausnehmungen entspricht im Prinzip derjenigen des ersten Ausführungsbeispiels, wobei der erste Bolzen 22 hinten angeordnet ist, so dass bei einem Verfahren der ersten Oberschiene 16 relativ zur ersten Unterschiene 10 nach hinten, eine erste Drehbewegung um den ersten Bolzen 22 im Uhrzeigersinn erfolgt. Nach Beendigung dieser Drehbewegung wird die Druckfeder am ersten Bolzen 22 beaufschlagt, so dass der Bolzen 22 drehbar gehalten ist, während der bislang drehbar durch eine andere Druckfeder gehaltene Bolzen 26 freigegeben wird. Dadurch kann bei einem (Rück-)Verfahren der ersten Oberschiene 16 relativ zur ersten Unterschiene 10 nach vorn eine zweite Drehbewegung um den dritten Bolzen 26 erfolgt, wodurch der Fahrzeugsitz wieder geradegestellt wird, aber in einer Position, die seitlich versetzt zur Ausgangsposition ist (vgl. Fig. 9).

Obwohl vorstehend nicht näher beschrieben, kann bei geeigneter Steuerung des Verfahrens der ersten Oberschiene 16 relativ zur zweiten Oberschiene 18, welches eine Drehbewegung um den ersten Bolzen 22 bewirkt, und bei einer geeigneten Rückbewegung, welches besagte zweite Drehbewegung um den dritten Bolzen 26 bewirkt, im Prinzip auch eine beliebige seitliche Verschiebung des Fahrzeugsitzes bewirkt werden. Hierbei muss jedoch ein drehbares Festlegen der Bolzen 22 und 26 innerhalb der Ausnehmung 32 bzw. 36 an beliebiger Stelle ermöglicht werden.

Gemäß dem dritten und vierten Ausführungsbeispiel erfolgt die seitliche Verschiebung der Sitzstruktur gegenüber den Schienen durch eine einfache Vor- oder Rückbewegung einer der Oberschienen relativ zur anderen Oberschiene. Hierbei ist die relative Ausgangsposition der Oberschienen zueinander unterschiedlich von der relativen Endposition derselben. Zur leichteren Verständlichkeit sind gleiche oder gleichwirkende Elemente mit den gleichen Bezugszeichen wie bei den zuvor beschriebenen Ausführungsbeispielen bezeichnet.

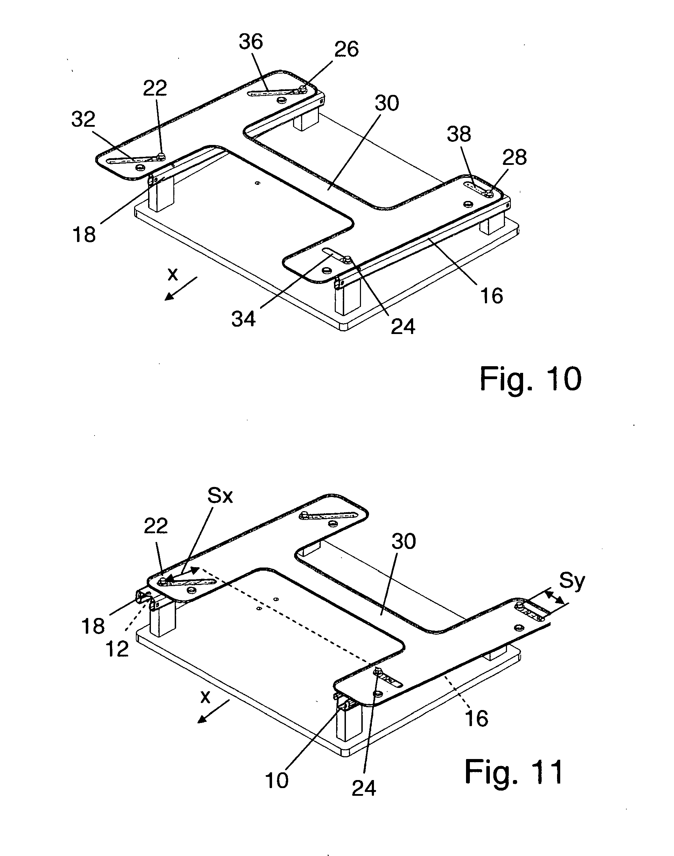

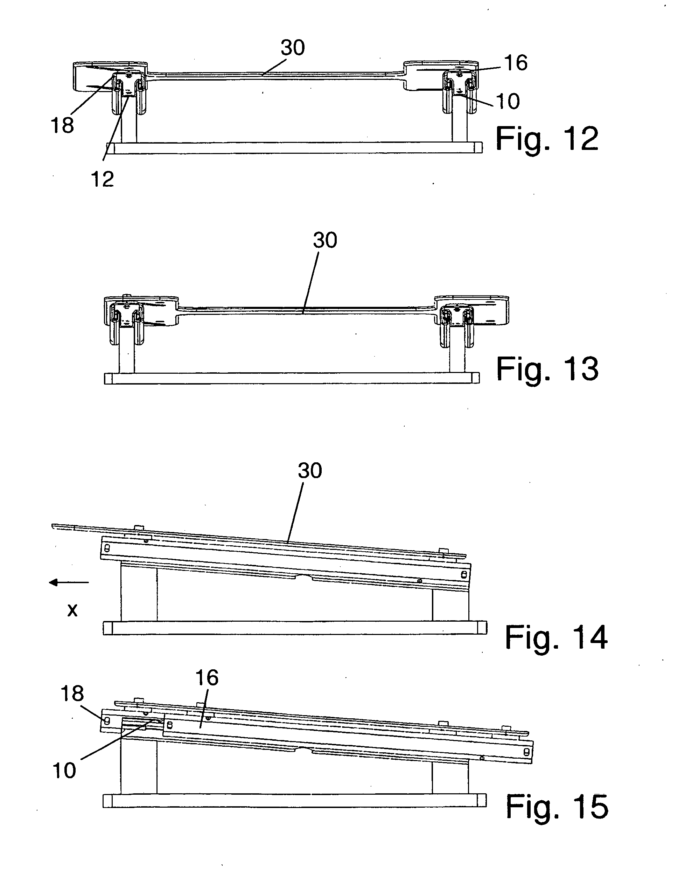

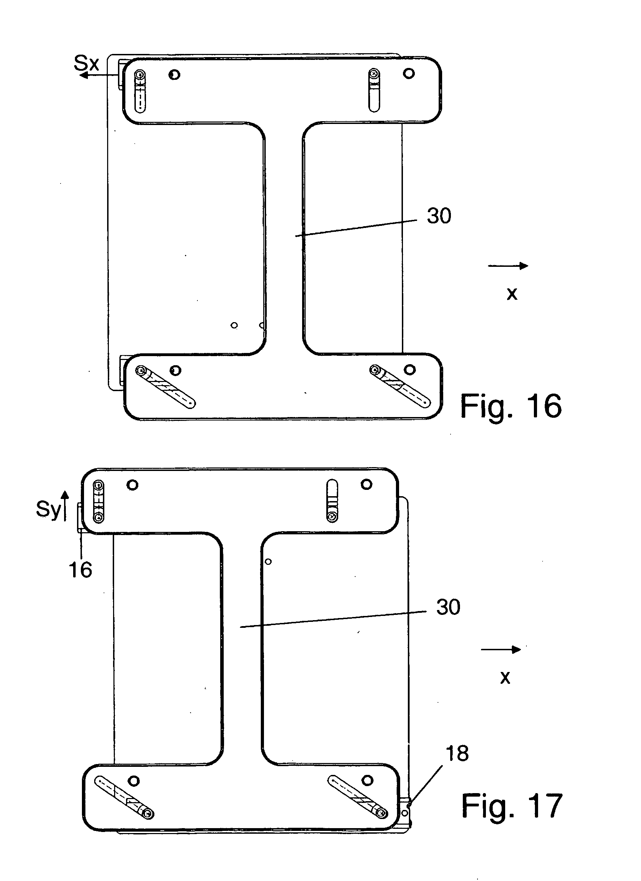

Im Folgenden wird unter Bezugnahme auf die Figuren 10 bis 17 das dritte Ausführungsbeispiel näher beschrieben. Hierbei sind, entsprechend dem ersten Ausführungsbeispiel eine erste Unterschiene 10 und eine zweite Unterschiene 12 parallel zueinander an einem Fahrzeugboden befestigt (fahrzeugstrukturfest), wobei die Unterschienen 10 und 12 vorliegend schräg zum Fahrzeugboden angeordnet sind, jedoch ist auch eine parallele Anordnung möglich. Eine erste Oberschiene 16 ist in der ersten Unterschiene 10 beweglich geführt. Ebenso ist eine zweite Oberschiene 18 in der zweiten Unterschiene 12 beweglich geführt. Die Bewegungsrichtung der Oberschienen 16, 18 relativ zu den Unterschienen 10, 12 sei als Längsrichtung bezeichnet. Die Oberschienen 16, 18 sind in Fahrtrichtung sowie entgegen der Fahrtrichtung verschiebbar, wobei sich automatisch die Sitzhöhe etwas verändert.

Eine (sitzstrukturfeste) Konsole 30 liegt auf den Oberschienen 16, 18 auf und ist auf eine nachfolgend beschriebene Weise an diesen gelagert. Auf der Konsole 30 ist ein Sitzkissen 44 montiert. Die Konsole 30 hat in diesem Beispiel die Form einer ebenen H-förmigen Platte, welche sich mit ihren Schenkeln im wesentlichen in Längsrichtung und mittig hierzu in einer senkrecht dazu (und horizontal) verlaufenden, als Querrichtung bezeichneten Richtung erstreckt.

Durch synchrones Verschieben der ersten Oberschiene 16 und der zweiten Oberschiene 18 relativ zu den Unterschienen 10, 12 erfährt die Konsole 30 eine Verschiebung in Längsrichtung.

Die Konsole 30 weist eine erste Ausnehmung 32 in Gestalt eines schräg zur Längsrichtung angeordneten, geraden Langlochs auf, durch welche ein an der zweiten Oberschiene 18 befestigter erster Bolzen 22 ragt, dessen Mittelachse eine erste Achse bildet. Hierbei hat das Langloch im Wesentlichen eine Breite, welche dem Durchmesser des ersten Bolzens 22 entspricht.

Weiterhin weist die Konsole 30 eine zweite Ausnehmung 34 in Gestalt eines Langlochs auf, durch welche ein an der ersten Oberschiene 16 befestigter zweiter Bolzen 24 ragt. Die zweite Ausnehmung 34 hat in diesem Beispiel die Form eines verlaufenden geraden Langlochs, das senkrecht zur Längsrichtung angeordnet ist, mit einer dem Durchmesser des zweiten Bolzens 24 entsprechenden Breite. Die zweite Ausnehmung 34 erstreckt sich somit schräg zur ersten Ausnehmung 32.

Die Konsole 30 weist außerdem eine dritte Ausnehmung 36 auf, durch welche ein an der zweiten Oberschiene 18 befestigter dritter Bolzen 26 ragt. Die dritte Ausnehmung 36 hat eine dem ersten Langloch entsprechende Gestalt und ist parallel zu demselben angeordnet. Es hat eine dem Durchmesser des dritte Bolzens 26 entsprechenden Breite.

Weiterhin weist die Konsole 30 eine vierte Ausnehmung 38 auf, durch welche ein an der ersten Oberschiene 16 befestigter vierter Bolzen 28 ragt. Die vierte Ausnehmung 38 hat eine dem zweiten Langloch entsprechende Gestalt und ist parallel zu demselben angeordnet. Es hat eine dem Durchmesser des vierten Bolzens 28 entsprechende Breite.

Die Mittelachsen der Bolzen 22, 24, 26, 28 verlaufen parallel zueinander, senkrecht zur Ebene der Konsole 30. Die Ausnehmungen 32, 34, 36, 38 sind so ausgestaltet, dass bei einer Verschiebung der ersten Oberschiene 16 relativ zu der zweiten Oberschiene 18 in Längsrichtung, vorliegend bei einer Verschiebung derselben aus der Ausgangsposition mit paralleler Anordnung der Oberschienen 16, 18, wie in Fig. 10 dargestellt, nach hinten, eine seitliche Verschiebung der Konsole 30 von rechts nach links ermöglicht ist, wobei die Richtungsangaben sich auf einen nach vorn ausgerichteten Fahrzeugsitz in Bezug auf die normalen Fahrtrichtungsangaben des Fahrzeugs beziehen. Die Fahrtrichtung "vorwärts" ist in Fig. 10 durch einen Pfeil an dem dargestellten Ausschnitt der Fahrzeugstruktur angedeutet.

Gemäß dem dritten Ausführungsbeispiel erfolgt, wie aus den Figuren 10 und 11 ersichtlich ist, im Falle einer Verschiebung der ersten Oberschiene 16 nach hinten ein Verfahren der Konsole 30 nach hinten und links. Die maximale Rückwärtsbewegung Sx der linken, ersten Oberschiene 16 wird durch die Länge der schräg angeordneten Aufnahmen 32, 36 auf Seite der rechten, zweiten Oberschiene 18 begrenzt. Die Rückwärtsbewegung erfolgt durch ein Zurückfahren der bewegten Schiene, also ein Zurückfahren der ersten Oberschiene 16.

Die Seitwärtsbewegung, welche vorliegend bei einer Verschiebung Sy von rechts nach links auch mit besagter Rückwärtsbewegung um die Strecke Sx und bei einer (Rück-)Verschiebung von links nach rechts mit einer entsprechenden Vorwärtsbewegung des Fahrzeugsitzes verbunden ist, kann natürlich auch während einer Längseinstellung des Fahrzeugsitzes erfolgen. Relevant für die seitliche Verschiebung ist ausschließlich die Relativbewegung der linken Oberschiene im Verhältnis zur rechten Oberschiene.

Selbstverständlich ist auch - insbesondere für den Sitz der anderen Fahrzeugseite - eine umgekehrte Bewegung nach außen möglich, wofür die gesamte Anordnung spiegelbildlich zur Mittellängsebene ausgebildet ist, so dass bei einer Rückbewegung der rechten Oberschiene eine Bewegung aus einer (beispielsweise in Bezug auf einen im Fahrzeug rechts eingebauten Fahrzeugsitz) inneren Ausgangsposition nach rechts, also außen (und hinten) möglich ist.

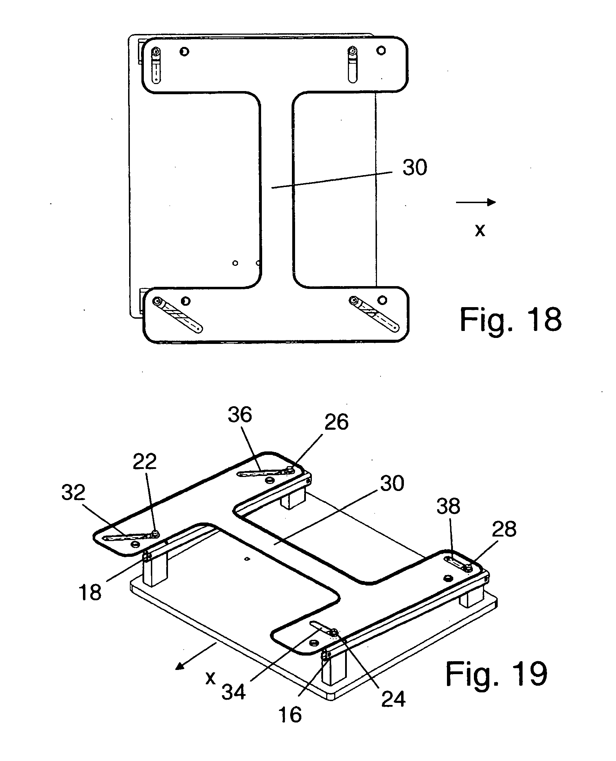

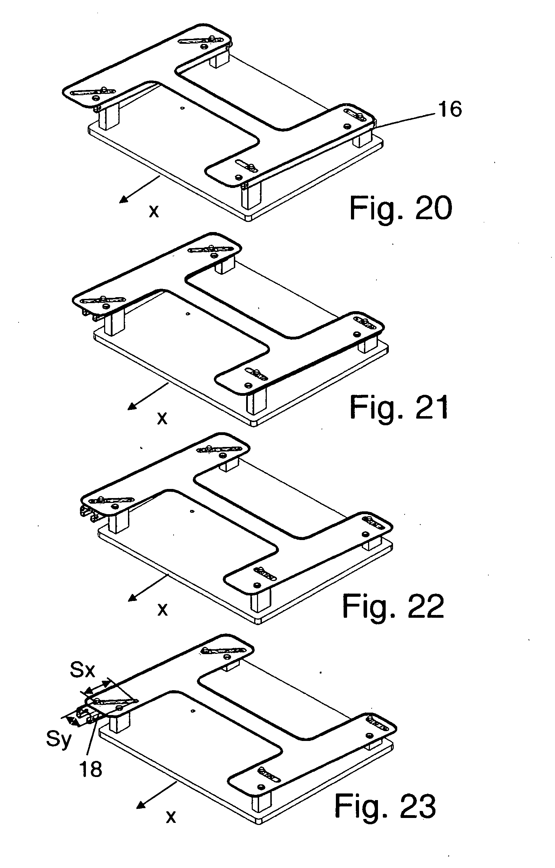

Das vierte, in den Figuren 18ff. dargestellte Ausführungsbeispiel unterscheidet sich vom dritten Ausführungsbeispiel nur dadurch, dass die Betätigung der seitlichen Verschiebung nicht über die erste Oberschiene 16 mit den senkrecht zur Längsrichtung angeordneten Ausnehmungen 34, 38, sondern über die zweite Oberschiene 18 mit den schräg zur Längsrichtung angeordneten Ausnehmungen 32, 36 erfolgt. Durch das Verfahren der zweiten Oberschiene 18 in Vorwärtsrichtung um die Strecke Sx verschiebt sich die Konsole 30 infolge der schrägen Anordnung der Ausnehmungen 32, 36 in seitlicher Richtung (nur) nach links, insgesamt um die Strecke Sy, wie in Fig. 23 angedeutet. Eine Sitzverschiebung in Längsrichtung kann durch eine ausschließliche Betätigung der zweiten Oberschiene 18 somit vermieden werden.

Die schräg angeordneten Ausnehmungen 34, 38 sind gemäß dem dritten und vierten Ausführungsbeispiel in einem Winkel von etwa 45° zur Längsrichtung (x-Richtung) angeordnet, jedoch kann der Winkel auch hiervon abweichen und insbesondere in einem Bereich von 30° bis 60° zur Längsrichtung liegen, je nach gewünschtem (oder realisierbaren) Übersetzungsverhältnis in Bezug auf die Längsverschiebung der bewegten Oberschiene. Ebenfalls sind Krümmungen möglich, beispielsweise um das Erreichen der Endstellung bei konstanter Geschwindigkeit der Bewegung der Oberschiene zu verlangsamen.

Gemäß dem dritten und vierten Ausführungsbeispiel können die Bolzen auf einer Seite auch direkt an der Fahrzeugstruktur angeordnet sein, d.h. eines der Ober-/Unterschienenpaare samt Motor kann entfallen. In diesem Fall ist der Fahrzeugsitz im Falle des dritten Ausführungsbeispiels nur um die Strecke Sx in Längsrichtung und gleichzeitig um die Strecke Sy in Querrichtung verschiebbar. Im Falle des vierten Ausführungsbeispiels ist der Fahrzeugsitz nur in Querrichtung um die Strecke Sy verschiebbar. Diese Anordnung ist insbesondere für eine zweite oder dritte Sitzreihe geeignet, welche keine Längseinstellbarkeit der Fahrzeugsitze vorsieht.

Obwohl vorstehend nicht beschrieben, können die zuvor beschriebenen Seitwärtsbewegungen des Fahrzeugsitzes auch mit einer Drehbewegung kombiniert werden, welche beispielsweise durch eine herkömmliche Drehkonsole erzeugt wird, so dass bspw. das Aussteigen erleichtert werden kann.

### Bezugszeichenliste

- 10: erste Unterschiene
- 12: zweite Unterschiene
- 16: erste Oberschiene
- 18: zweite Oberschiene
- 22: erster Bolzen
- 24: zweiter Bolzen
- 26: dritter Bolzen
- 28: vierter Bolzen
- 30: Konsole
- 32: erste Ausnehmung
- 34: zweite Ausnehmung
- 36: dritte Ausnehmung
- 38: vierte Ausnehmung
- 39: Verriegelungsmechanismus
- 44: Sitzkissen
- 46: vorderes Ende des Sitzkissens
- 48: hinteres Ende des Sitzkissens
- 50: Rückenlehne
- Sx: Strecke in Längsrichtung
- Sy: Strecke in Querrichtung

## Patentansprüche

1. Fahrzeugsitz, welcher von einer Ausgangsposition in eine seitlich versetzte Endposition und zurück bewegbar ist, wobei der Fahrzeugsitz sowohl in der Ausgangsposition als auch in der Endposition in gleicher Richtung ausgerichtet ist, aufweisend eine erste Oberschiene (16), welche in einer ersten Unterschiene (10) beweglich geführt ist, **dadurch gekennzeichnet, dass** eine zweite Oberschiene (18), welche in einer zweiten Unterschiene (12) beweglich geführt ist, und ein Sitzkissen (44), welches an der mindestens einen Oberschiene (16, 18) beweglich gelagert ist,
wobei
die Seitwärtsbewegung des Sitzkissens (44) in Bezug auf die Schienen (10, 12, 16, 18) durch Durchführung
einer vorbestimmten Vorwärts- und anschließenden Rückwärtsbewegung der ersten Oberschiene (16) relativ zur zweiten Oberschiene (18), oder
einer vorbestimmten Rückwärts- und anschließenden Vorwärtsbewegung der ersten Oberschiene (16) relativ zur zweiten Oberschiene (18) oder
einer vorbestimmten relativen Vorwärtsbewegung der ersten Oberschiene in Bezug auf die zweite Oberschiene, oder
einer vorbestimmten relativen Rückwärtsbewegung der ersten Oberschiene (16) in Bezug auf die zweite Oberschiene (18),
bewirkt wird.

2. Fahrzeugsitz nach Anspruch 1, **dadurch gekennzeichnet, dass** das Sitzkissen (44) auf einer sitzstrukturfesten Konsole (30) befestigt ist, welche auf den Oberschienen (16, 18) aufliegt und hieran beweglich gelagert ist.

3. Fahrzeugsitz nach Anspruch 2, **dadurch gekennzeichnet, dass** die Konsole (30) an der zweiten Oberschiene (18) zur Durchführung einer ersten Drehbewegung in eine erste Drehrichtung um eine erste Achse, und ferner zur Durchführung einer zeitlich zur ersten Drehbewegung nachgeordnet durchführbaren, zweiten Drehbewegung in eine zweite Drehrichtung, die entgegengesetzt zur ersten Drehrichtung ist, um eine zweite Achse, welche beabstandet zur ersten Achse positioniert ist, an der zweiten Oberschiene (18) drehbar gelagert ist,
und die beiden Achsen parallel zueinander verlaufend und in vertikaler Richtung in Bezug auf den Fahrzeugsitz ausgerichtet sind.

4. Fahrzeugsitz nach Anspruch 3, **dadurch gekennzeichnet, dass** die erste und die zweite Drehbewegung den gleichen Winkelbereich umfassen, aber in entgegengesetzten Richtungen verlaufen.

5. Fahrzeugsitz nach Anspruch 3 oder 4, **dadurch gekennzeichnet, dass** die Konsole (30) aufweist:
eine erste Ausnehmung (32), durch welche ein an der zweiten Oberschiene (18) befestigter erster Bolzen (22) ragt,
eine zweite Ausnehmung (34), durch welche ein an der ersten Oberschiene (16) befestigter zweiter Bolzen (24) ragt, und
eine dritte Ausnehmung (36), durch welche ein an der zweiten Oberschiene (18) befestigter dritter Bolzen (26) ragt,
wobei die zweite und dritte Ausnehmung (34, 36) derart als Kulissenbahnen ausgebildet sind, dass bei einer Verschiebung der ersten Oberschiene (16) relativ zu der zweiten Oberschiene (18) in Längsrichtung eine Drehung der Konsole (30) um die Mittelachse des ersten Bolzens (22) ermöglicht ist.

6. Fahrzeugsitz nach Anspruch 5, **dadurch gekennzeichnet, dass** die zweite und dritte Ausnehmung (34, 36) derart als Kulissenbahnen ausgebildet sind, dass bei einer Rückverschiebung der ersten Oberschiene (16) relativ zu der zweiten Oberschiene (18) in Längsrichtung eine Rückdrehung der Konsole (30) um die Mittelachse des dritten Bolzens (26) ermöglicht ist.

7. Fahrzeugsitz nach einem der Ansprüche 3 bis 6, **dadurch gekennzeichnet, dass** während der ersten Drehbewegung die zweite Oberschiene (16) relativ zur zweiten Unterschiene (12) in Bezug auf die normale Ausrichtung des Fahrzeugsitzes in einem Fahrzeug nach hinten und während der zweiten Drehbewegung wieder nach vorn, zurück in die Ausgangsposition verschiebbar ist, währenddessen der Fahrzeugsitz durch zwei Drehbewegungen um unterschiedliche Achsen zur Seite verschiebbar ist.

8. Fahrzeugsitz nach Anspruch 2, **dadurch gekennzeichnet, dass** die Konsole (30) mittels Kulissenbahnen, gebildet durch schlitzförmige Ausnehmungen (32, 34, 36, 38) in Verbindung mit oberschienenfesten Kulissensteinen geführt ist, wobei sich die Ausrichtung der Kulissenbahn(en) auf der Seite der ersten Oberschiene (18) von der Ausrichtung der Kulissenbahn(en) auf der Seite der zweiten Oberschiene (16) unterscheidet, und auf der Seite der ersten und/oder der zweiten Oberschiene (18 bzw. 16) zwei einander entsprechende Kulissenbahnen ausgebildet sind, und insgesamt mindestens drei Kulissenbahnen vorgesehen sind.

9. Fahrzeugsitz nach Anspruch 8, **dadurch gekennzeichnet, dass** die Kulissenbahnen auf der Seite einer Oberschiene senkrecht zur Längsrichtung der Oberschiene angeordnet sind, und dass die Kulissenbahnen auf der Seite der anderen Oberschiene schräg hierzu angeordnet sind.

## Claims

1. Vehicle seat which may be moved from a starting position into a laterally offset end position and back again, wherein the vehicle seat is oriented in the same direction both in the starting position and in the end position, comprising a first upper rail (16) which is movably guided in a first lower rail (10), **characterized in that** a second upper rail (18) which is movably guided in a second lower rail (12), and a seat cushion (44) which is movably mounted on the at least one upper rail (16, 18),
wherein
the lateral movement of the seat cushion (44) relative to the rails (10, 12, 16, 18) is accomplished by carrying out a predetermined forward and then rearward movement of the first upper rail (16) relative to the second upper rail (18) or a predetermined rearward and then forward movement of the first upper rail (16) relative to the second upper rail (18) or a predetermined forward movement of the first upper rail relative to the second upper rail, or a predetermined rearward movement of the first upper rail (16) relative to the second upper rail (18).

2. Vehicle seat according to Claim 1, **characterized in that** the seat cushion (44) is fastened to a support (30) which is fixed to the seat structure and which bears against the upper rails (16, 18) and is movably mounted thereon.

3. Vehicle seat according to Claim 2, **characterized in that** the support (30) on the second upper rail (18) is rotatably mounted on the second upper rail (18) for carrying out a first rotational movement in a first rotational direction about a first axis, and also for carrying out a second rotational movement which may be carried out chronologically after the first rotational movement, in a second rotational direction which opposes the first rotational direction, about a second axis which is positioned spaced apart from the first axis, and the two axes are oriented extending parallel to one another and in the vertical direction relative to the vehicle seat.

4. Vehicle seat according to Claim 3, **characterized in that** the first and the second rotational movements have the same angular range but run in opposing directions.

5. Vehicle seat according to Claim 3 or 4, **characterized in that** the support (30) comprises:
a first recess (32) through which a first pin (22) fastened to the second upper rail (18) protrudes,
a second recess (34) through which a second pin (24) fastened to the first upper rail (16) protrudes, and
a third recess (36) through which a third pin (26) fastened to the second upper rail (18) protrudes,
wherein the second and third recesses (34, 36) are formed as sliding tracks such that with a displacement of the first upper rail (16) relative to the second upper rail (18) in the longitudinal direction a rotation of the support (30) is possible about the center axis of the first pin (22).

6. Vehicle seat according to Claim 5, **characterized in that** the second and third recesses (34, 36) are configured as sliding tracks such that with a rearward displacement of the first upper rail (16) relative to the second upper rail (18) in the longitudinal direction it is possible to rotate the support (30) back around the center axis of the third pin (26).

7. Vehicle seat according to one of Claims 3 to 6, **characterized in that** during the first rotational movement the second upper rail (16) is displaceable relative to the second lower rail (12) to the rear, with regard to the normal orientation of the vehicle seat in a vehicle and during the second rotational movement is displaceable again to the front, back into the starting position, during which the vehicle seat is laterally displaceable by two rotational movements about different axes.

8. Vehicle seat according to Claim 2, **characterized in that** the support (30) is guided by means of sliding tracks formed by slotted recesses (32, 34, 36, 38) in combination with sliding blocks fixed to the upper rail, wherein the orientation of the sliding track(s) on the side of the first upper rail (18) differs from the orientation of the sliding track (s) on the side of the second upper rail (16), and two sliding tracks corresponding to one another are formed on the side of the first and/or second upper rail (18 and/or 16) and a total of at least three sliding tracks is provided.

9. Vehicle seat according to Claim 8, **characterized in that** the sliding tracks are arranged on the side of an upper rail perpendicular to the longitudinal direction of the upper rail, and **in that** the sliding tracks on the side of the other upper rail are arranged obliquely thereto.

## Revendications

1. Siège de véhicule, lequel peut être déplacé d'une position initiale à une position finale décalée latéralement et inversement, le siège de véhicule étant orienté dans la même direction tant dans la position initiale que dans la position finale, comprenant un premier rail supérieur (16), lequel est guidé de manière mobile dans un premier rail inférieur (17), **caractérisé en ce qu'**un deuxième rail supérieur (18) est guidé de manière mobile dans un deuxième rail inférieur (12) et un coussin de siège (44) est placé de manière mobile sur l'au moins un rail supérieur (16, 18),
le mouvement latéral du coussin de siège (44) par rapport aux rails (10, 12, 16, 18) étant provoqué par l'exécution
d'un mouvement prédéfini vers l'avant et ensuite vers l'arrière du premier rail supérieur (16) par rapport au deuxième rail supérieur (18), ou
d'un mouvement prédéfini vers l'arrière et ensuite vers l'avant du premier rail supérieur (16) par rapport au deuxième rail supérieur (18), ou
d'un déplacement prédéfini relatif vers l'avant du premier rail supérieur par rapport au deuxième rail supérieur, ou
d'un déplacement prédéfini relatif vers l'arrière du premier rail supérieur (16) par rapport au deuxième rail supérieur (18).

2. Siège de véhicule selon la revendication 1, **caractérisé en ce que** le coussin de siège (44) est fixé à un support (30) solidaire de la structure de siège, lequel support repose sur les rails supérieurs (16, 18) et est monté mobile sur ceux-ci.

3. Siège de véhicule selon la revendication 2, **caractérisé en ce que** le support (30) sur le deuxième rail supérieur (18) est monté à rotation sur le deuxième rail supérieur (18) pour l'exécution d'un premier mouvement de rotation dans un premier sens de rotation autour d'un premier axe, et en outre pour l'exécution d'un deuxième mouvement de rotation, pouvant être effectué chronologiquement après le premier mouvement de rotation, dans un deuxième sens de rotation qui est opposé au premier sens de rotation, autour d'un deuxième axe qui est positionné à distance du premier axe,
et les deux axes sont orientés de manière à s'étendre parallèlement l'un à l'autre et dans la direction verticale par rapport au siège de véhicule.

4. Siège de véhicule selon la revendication 3, **caractérisé en ce que** le premier et le deuxième mouvement de rotation présentent la même plage angulaire mais s'étendent dans des sens opposés.

5. Siège de véhicule selon la revendication 3 ou 4, **caractérisé en ce que** le support (30) comprend :
un premier évidement (32) à travers lequel fait saillie un premier boulon (22) fixé au deuxième rail supérieur (18),
un deuxième évidement (34) à travers lequel fait saillie un deuxième boulon (24) fixé au premier rail supérieur (16), et
un troisième évidement (36) à travers lequel fait saillie un troisième boulon (26) fixé au deuxième rail supérieur (18),
les deuxième et troisième évidements (34, 36) étant réalisés sous forme de glissières, de telle sorte que, lors d'un déplacement du premier rail supérieur (16) par rapport au deuxième rail supérieur (18) dans la direction longitudinale,
une rotation du support (30) autour de l'axe médian du premier boulon (22) soit rendue possible.

6. Siège de véhicule selon la revendication 5, **caractérisé en ce que** les deuxième et troisième évidements (34, 36) sont réalisés sous forme de glissières, de telle sorte que, lors d'un déplacement vers l'arrière du premier rail supérieur (16) par rapport au deuxième rail supérieur (18) dans la direction longitudinale, une rotation vers l'arrière du support (30) autour de l'axe médian du troisième boulon (26) soit rendue possible.

7. Siège de véhicule selon l'une quelconque des revendications 3 à 6, **caractérisé en ce que**, pendant le premier mouvement de rotation, le deuxième rail supérieur (16) peut être déplacé vers l'arrière par rapport au deuxième rail inférieur (12) par rapport à l'orientation normale du siège de véhicule dans un véhicule et, pendant le deuxième mouvement de rotation, il peut être déplacé à nouveau vers l'avant de manière à revenir à la position initiale, tandis que le siège de véhicule peut être déplacé vers le côté par deux mouvements de rotation autour d'axes différents.

8. Siège de véhicule selon la revendication 2, **caractérisé en ce que** le support (30) est guidé au moyen de glissières formées par des évidements en forme de fentes (32, 34, 36, 38) en association avec des coulisseaux solidaires du rail supérieur, l'orientation de la ou des glissières du côté du premier rail supérieur (18) différant de l'orientation de la ou des glissières du côté du deuxième rail supérieur (16), et deux glissières correspondant l'une à l'autre étant réalisées du côté du premier et/ou du deuxième rail supérieur (18 ou 16), et au moins trois glissières en tout étant prévues.

9. Siège de véhicule selon la revendication 8, **caractérisé en ce que** les glissières du côté d'un rail supérieur sont disposées perpendiculairement à la direction longitudinale du rail supérieur, et **en ce que** les glissières du côté de l'autre rail supérieur sont disposées de manière inclinée par rapport à celui-ci.
